# EUROPEAN PATENT APPLICATION

(11) **EP 4 614 025 A1**
(43) Date of publication of application: **10.09.2025**
(21) Application number: 23885724.7
(22) Date of filing: 30.10.2023
(51) Int. Cl.: F16F 1/12

(54) **COIL SPRING DEVICE**

(30) Priority: 31.10.2022 JP 2022174243
(71) Applicant: NHK Spring Co., Ltd., Yokohama-shi, Kanagawa 236-0004 (JP)
(72) Inventor: SHIGEMATSU, Ryohei, Yokohama-shi, Kanagawa 236-0004 (JP); SUWA, Taisuke, Yokohama-shi, Kanagawa 236-0004 (JP); KOBAYAKAWA, Jun, Yokohama-shi, Kanagawa 236-0004 (JP); SHIBATA, Yuichi, Yokohama-shi, Kanagawa 236-0004 (JP); SUGITANI, Tomoya, Yokohama-shi, Kanagawa 236-0004 (JP)
(74) Representative: V.O.
(86) International application number: PCT/JP2023/039129
(87) International publication number: WO 2024/095970

(57) **Abstract**

A coil spring device includes a main body spring in which a wire rod extends in a vertical direction in a spiral shape around a coil axis, and an insulator made of rubber or an elastomer and configured to support a lower end part of the main body spring from below the main body spring, in which the insulator is provided with a support groove that extends around the coil axis and into which the lower end part of the main body spring is inserted, a support plate formed of plastic or a metal material is fixed to an inner surface of the support groove, and the lower end part of the main body spring is adhered to the support plate.

## Description

### TECHNICAL FIELD

The present invention relates to a coil spring device.

Priority is claimed on Japanese Patent Application No. 2022-174243, filed October 31, 2022, the content of which is incorporated herein by reference.

### BACKGROUND ART

In the related art, a coil spring device that is used by being mounted on a suspension device has been known to include a main body spring in which a wire rod extends in a vertical direction in a spiral shape around a coil axis, and an insulator that is made of rubber or an elastomer and supports a lower end part of the main body spring from below the main body spring, in which the insulator is provided with a support groove that extends around the coil axis and into which the lower end part of the main body spring is inserted, and the lower end part of the main body spring is adhered to an inner surface of the support groove.

### Citation List

### Patent Document

Patent Document 1: Japanese Unexamined Patent Application, First Publication No. 2017-15249

### SUMMARY OF INVENTION

### Technical Problem

In order to fix the lower end part of the main body spring to the insulator through adhesion, it is necessary to perform surface treatment on the inner surface of the support groove made of rubber or an elastomer in advance using, for example, a chlorine-containing chemical and an organic solvent, or to remove a precipitate such as a wax component from the inner surface of the support groove. In this case, manufacturing man-hours are required, and there is a possibility that, for example, a manufacturing facility or the like is restricted.

An object of the present invention is to provide a coil spring device in which a lower end part of a main body spring can be fixed to an insulator by adhesion without performing pretreatment such as surface treatment.

### Solution to problem

A coil spring device according to one aspect of the present invention includes a main body spring in which a wire rod extends in a vertical direction in a spiral shape around a coil axis, and an insulator made of rubber or an elastomer and configured to support a lower end part of the main body spring from below the main body spring, in which the insulator is provided with a support groove that extends around the coil axis and into which the lower end part of the main body spring is inserted, a support plate formed of plastic or a metal material is fixed to an inner surface of the support groove, and the lower end part of the main body spring is adhered to the support plate.

The lower end part of the main body spring is adhered to the support plate formed of plastic or a metal material, instead of the inner surface of the support groove made of rubber or an elastomer. Therefore, the lower end part of the main body spring can be reliably adhered to the support plate without performing surface treatment in advance using, for example, a chlorine-containing chemical and an organic solvent, or removing a precipitate such as a wax component, unlike a case where the lower end part of the main body spring is adhered to the inner surface of the support groove. As a result, it is possible to fix the lower end part of the main body spring to the insulator through adhesion without performing pretreatment such as surface treatment.

The support plate may be configured to be deformed in response to elastic deformation of the insulator.

The support plate fixed to the inner surface of the support groove is deformed in response to the elastic deformation of the insulator. Therefore, it is possible to prevent the support plate from affecting the performance of the coil spring device.

The support plate may be vulcanized and adhered to the inner surface of the support groove.

The support plate is vulcanized and adhered to the inner surface of the support groove. Therefore, when fixing the support plate to the inner surface of the support groove, it is possible to omit a step of performing surface treatment on the inner surface of the support groove in advance using, for example, a chlorine-containing chemical and an organic solvent, or removing a precipitate such as a wax component from the inner surface of the support groove. As a result, it is possible to prevent restrictions on a manufacturing facility or the like and to reliably reduce manufacturing man-hours.

The support plate may be formed in a semi-tubular shape that is open upward and that is curved to extend around the coil axis, and the lower end part of the main body spring may be inserted inside the support plate.

The support plate is formed in a semi-tubular shape extending around the coil axis, and the lower end part of the main body spring is inserted inside the support plate. Therefore, it is possible to ensure a wide adhesion area between the support plate and the lower end part of the main body spring.

A spacer configured to support an outer peripheral surface of the wire rod and provide a gap between the outer peripheral surface of the wire rod and the support plate may be provided between the support plate and the lower end part of the main body spring.

The spacer is provided between the support plate and the lower end part of the main body spring. Therefore, it is possible to make a thickness of an adhesive layer for adhering the support plate and the lower end part of the main body spring to each other constant, and the support plate and the lower end part of the main body spring can be stably and strongly adhered to each other.

### Advantageous Effects of Invention

According to this invention, it is possible to fix the lower end part of the main body spring to the insulator through adhesion without performing pretreatment such as surface treatment.

### BRIEF DESCRIPTION OF DRAWINGS

[FIG. 1] A perspective view of a coil spring device shown as an embodiment according to the present invention.
[FIG. 2] A top view showing part of the coil spring device of FIG. 1.
[FIG. 3] A cross-sectional view taken along a line III-III of FIG. 2.
[FIG. 4] A cross-sectional view taken along a line IV-IV of FIG. 2.
[FIG. 5] A view that corresponds to FIG. 3 and is shown as a first modification example according to the present invention.
[FIG. 6] A view that corresponds to FIG. 4 and is shown as the first modification example according to the present invention.
[FIG. 7] A view that corresponds to FIG. 3 and is shown as a second modification example according to the present invention.
[FIG. 8] A view (cross-sectional view taken along a line VIII-VIII of FIG. 9) that corresponds to FIG. 3 and is shown as a third modification example according to the present invention.
[FIG. 9] A bottom view of FIG. 8.

### DESCRIPTION OF EMBODIMENTS

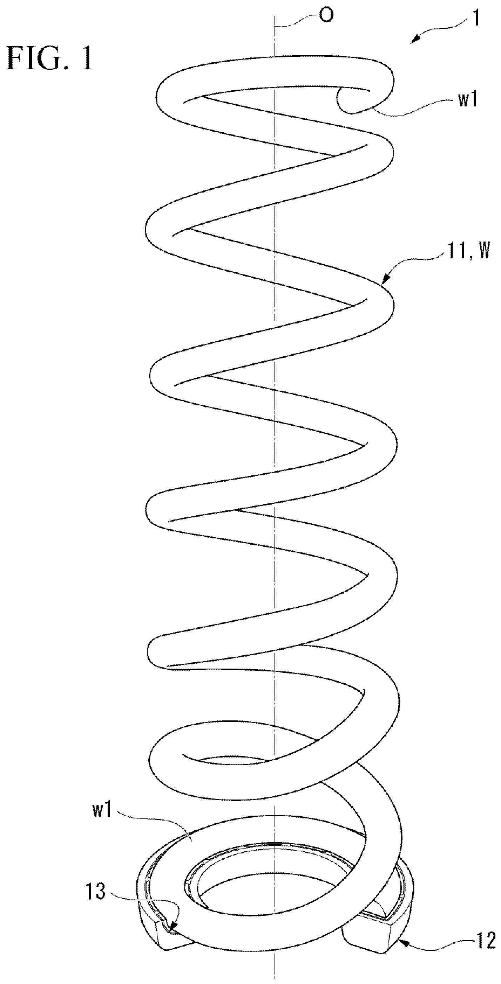

Hereinafter, an embodiment of a coil spring device according to the present invention will be described with reference to FIGS. 1 to 4.

A coil spring device 1 includes a main body spring 11 in which a wire rod W extends in a vertical direction in a spiral shape around a coil axis O, and an insulator 12 which is made of rubber or an elastomer and supports a lower end part of the main body spring 11 from below the main body spring 11. The coil spring device 1 is used by being mounted on, for example, a suspension device including a shock absorber that is inserted inside the main body spring 11 and a strut mount mounted on an upper end part of the shock absorber.

The main body spring 11 is an open-end coil spring in which an end part w1 of the wire rod W is separated in the vertical direction from a part of the wire rod W adjacent to the end part w1 on the inside in a direction of the coil axis O. A cross-sectional shape of the wire rod W is uniform over its entire length including the end part w1. In the example shown in the drawing, the cross-sectional shape of the wire rod W is circular.

As the main body spring 11, a closed-end coil spring in which the end part w1 of the wire rod W abuts and overlaps a part of the wire rod W adjacent to the end part w1 on the inside in the direction of the coil axis O may be employed. In this configuration, for example, the end part w1 of the wire rod W may be subjected to grinding or the like to form a flat surface that extends in a horizontal direction orthogonal to the vertical direction and that faces outward in the vertical direction. The cross-sectional shape of the wire rod W may be, for example, rectangular.

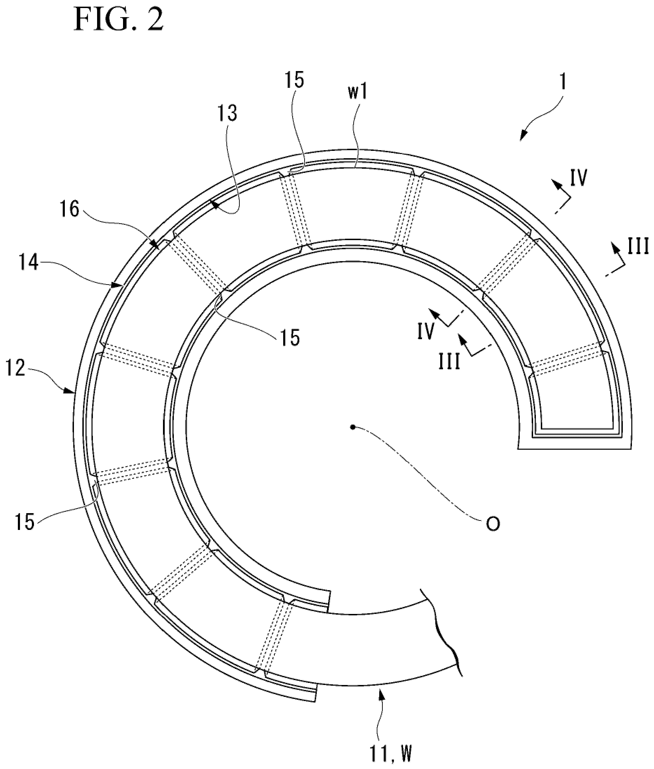

The insulator 12 is formed of, for example, vulcanized rubber, a thermosetting elastomer, or a thermoplastic elastomer. As shown in FIG. 2, the insulator 12 has an arc shape that extends around the coil axis O as viewed in the vertical direction. The insulator 12 extends around the coil axis O over an angular range of 180° or more and 360° or less.

A support groove 13 that extends around the coil axis O and into which the lower end part of the main body spring 11 is inserted is provided on an upper surface of the insulator 12. The support groove 13 extends around the coil axis O over an angular range of 180° or more and 360° or less.

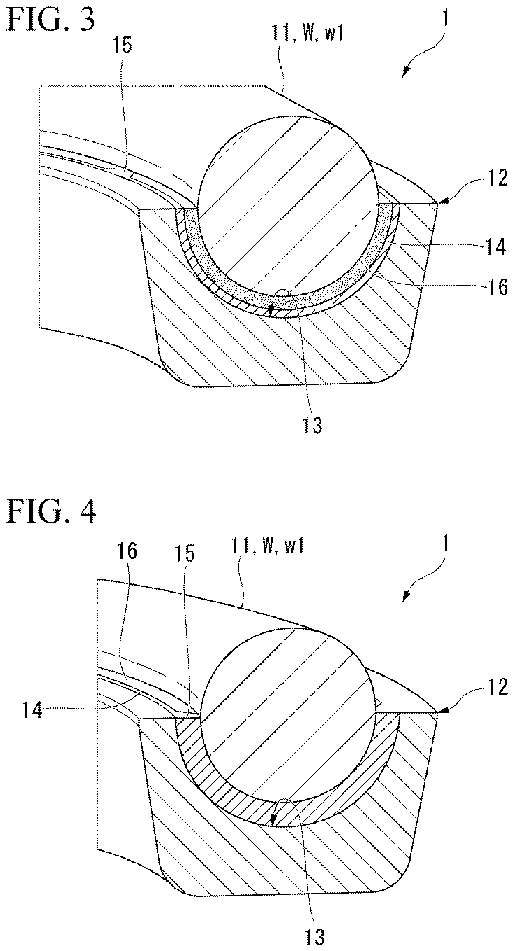

As shown in FIGS. 3 and 4, an inner surface of the support groove 13 has a concave curved shape curved along an outer peripheral surface of the wire rod W in a cross-sectional view taken along a radial direction intersecting the coil axis O as viewed in the vertical direction. The support groove 13 is integrally open on one side in a circumferential direction around the coil axis O and upward.

As the support groove 13, for example, a configuration in which the support groove 13 is open to both sides in the circumferential direction or a configuration in which the support groove 13 is open to at least one side in the radial direction may be employed.

In the present embodiment, a support plate 14 formed of plastic or a metal material is fixed to the inner surface of the support groove 13, and the lower end part of the main body spring 11 is adhered to the support plate 14.

When the support plate 14 is formed of plastic, the wettability, which is defined in JIS K 6768:1999, of a surface of the support plate 14 to which the lower end part of the main body spring 11 is adhered is higher than the wettability of the inner surface of the support groove 13. Examples of the plastic include an epoxy resin. The plastic may contain reinforcing fibers such as glass fibers and carbon fibers. When the support plate 14 is formed of plastic, the support plate 14 may be formed by, for example, injection molding.

When the support plate 14 is formed of a metal material, the support plate 14 may be formed by, for example, press forming. When the support plate 14 is formed of a metal material, at least the surface of the support plate 14 to which the lower end part of the main body spring 11 is adhered may be subjected to, for example, chromate treatment for rust prevention.

The support plate 14 is formed to be thin. As a result, the support plate 14 is elastically deformed in response to elastic deformation of the insulator 12, and can ensure a rubber volume of the insulator 12. The support plate 14 may be plastically deformed in response to the elastic deformation of the insulator 12.

The support plate 14 is vulcanized and adhered to the inner surface of the support groove 13. That is, with the support plate 14 set in a cavity as an insert component, unvulcanized rubber is injected into the cavity, and then pressurized and heated. As a result, the insulator 12 is molded through vulcanization, while simultaneously vulcanizing and adhering the support plate 14 to the inner surface of the support groove 13.

The support plate 14 may be adhered to the inner surface of the support groove 13 via, for example, an adhesive layer or by an anchor effect, without being limited to vulcanization and adhesion. In addition, the support plate 14 does not necessarily have to be adhered to the inner surface of the support groove 13 as long as the support plate 14 is integrally fixed to the inner surface of the support groove 13.

The lower end part of the main body spring 11 is bonded to the support plate 14 via an adhesive layer 16. The support plate 14 and the adhesive layer 16 are laminated between the inner surface of the support groove 13 and the lower end part of the main body spring 11.

A through-hole may be formed in the support plate 14 that is integrally fixed to the inner surface of the support groove 13, and the adhesive layer 16 may be adhered to the inner surface of the support groove 13 through the through-hole.

A spacer 15 that supports the outer peripheral surface of the wire rod W and provides a gap between the outer peripheral surface of the wire rod W and the support plate 14 is provided between the support plate 14 and the lower end part of the main body spring 11.

The spacer 15 is provided on the support plate 14 and is formed integrally with the support plate 14. The spacer 15 is formed as a protrusion extending in the radial direction. The spacer 15 extends over the entire length of the support plate 14 in the radial direction. A plurality of the spacers 15 are provided at intervals in the circumferential direction. The plurality of spacers 15 are provided over the entire region of the support plate 14 in the circumferential direction.

The form of the spacer 15 is not limited to the example shown in the drawing and may be changed as appropriate, and the spacer 15 may not be provided.

The support plate 14 is formed in a semi-split tubular shape (semi-tubular shape) that is open upward and that is curved to extend around the coil axis O. The lower end part of the main body spring 11 is inserted inside the support plate 14. The support plate 14 is curved along the inner surface of the support groove 13 and the outer peripheral surface of the wire rod W in a cross-sectional view taken along the radial direction. The support plate 14 is adhered to the entire inner surface of the support groove 13. An upper end opening edge of the support plate 14 and the upper surface of the insulator 12 are flush with each other.

The lower end part of the main body spring 11 is adhered to the inner surface of the support plate 14 via the adhesive layer 16. The spacer 15 is provided on the inner surface of the support plate 14. As shown in FIG. 4, an apex surface of the spacer 15 extends along the inner surface of the support groove 13 and the outer peripheral surface of the wire rod W in a cross-sectional view taken along the radial direction. A thickness of the adhesive layer 16 is uniform over the entire region.

As described above, in the coil spring device 1 according to the present embodiment, the lower end part of the main body spring 11 is adhered to the support plate 14 formed of plastic or a metal material, instead of the inner surface of the support groove 13. Therefore, the lower end part of the main body spring 11 can be reliably adhered to the support plate 14 without performing surface treatment in advance using, for example, a chlorine-containing chemical and an organic solvent, or removing a precipitate such as a wax component, unlike a case where the lower end part of the main body spring 11 is adhered to the inner surface of the support groove 13.

As a result, it is possible to fix the lower end part of the main body spring 11 to the insulator 12 through adhesion without performing pretreatment such as surface treatment.

The support plate 14 fixed to the inner surface of the support groove 13 is deformed in response to the elastic deformation of the insulator 12. Therefore, it is possible to prevent the support plate 14 from affecting the performance of the coil spring device 1.

The support plate 14 is vulcanized and adhered to the inner surface of the support groove 13. Therefore, when fixing the support plate 14 to the inner surface of the support groove 13, it is possible to omit a step of performing surface treatment on the inner surface of the support groove 13 in advance using, for example, a chlorine-containing chemical and an organic solvent, or removing a precipitate such as a wax component from the inner surface of the support groove 13. As a result, it is possible to prevent restrictions on a manufacturing facility or the like and to reliably reduce manufacturing man-hours.

The support plate 14 is formed in a semi-split tubular shape extending around the coil axis O, and the lower end part of the main body spring 11 is inserted inside the support plate 14. Therefore, it is possible to ensure a wide adhesion area between the support plate 14 and the lower end part of the main body spring 11.

The spacer 15 is provided between the support plate 14 and the lower end part of the main body spring 11. Therefore, it is possible to make the thickness of the adhesive layer 16 for adhering the support plate 14 and the lower end part of the main body spring 11 to each other constant, and the support plate 14 and the lower end part of the main body spring 11 can be stably and strongly adhered to each other.

The technical scope of the present invention is not limited to the above-described embodiments, and various modifications can be made within the scope not departing from the meaning of the present invention.

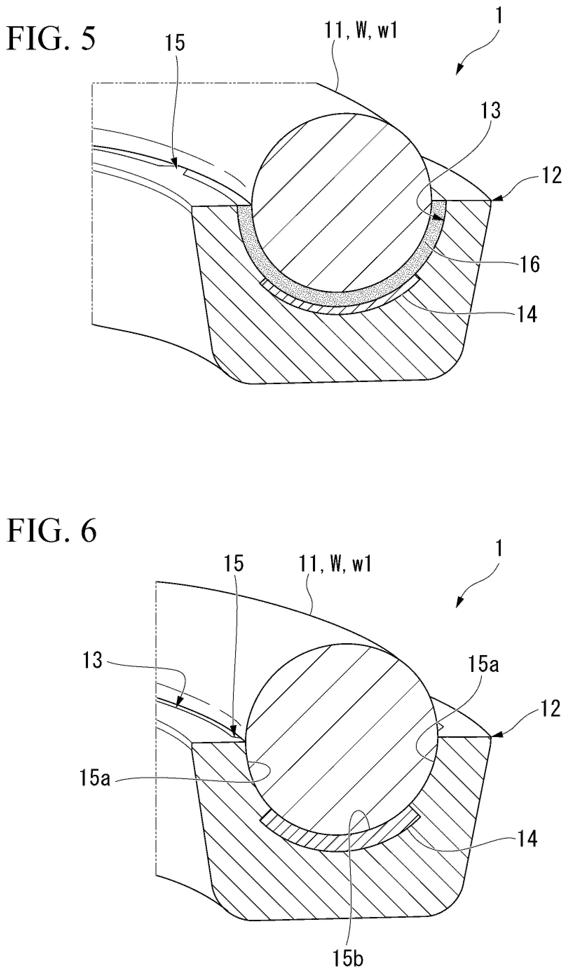

As the support plate 14, for example, a configuration in which a plurality of plate bodies are provided at intervals around the coil axis O or a configuration in which the plate body is provided only on part of the inner surface of the support groove 13 in a cross-sectional view taken along the radial direction as shown in FIGS. 5 and 6 may be employed.

In the latter configuration, the support plate 14 is embedded in the insulator 12 except for its inner surface such that the inner surface of the support plate 14 and the inner surface of the support groove 13 are connected without any steps in a cross-sectional view taken along the radial direction, as shown in FIG. 5. In addition, as shown in FIG. 6, in a cross-sectional view taken along the radial direction, a first protrusion portion 15a is formed on a portion of the inner surface of the support groove 13 where the support plate 14 is not provided and a second protrusion portion 15b is formed on the inner surface of the support plate 14. The first protrusion portion 15a and the second protrusion portion 15b are connected in the radial direction to form the spacer 15. In the example shown in the drawing, the support plate 14 is provided at an intermediate part in the radial direction of the inner surface of the support groove 13, the first protrusion portions 15a are provided at both end parts in the radial direction of the support groove 13, and the second protrusion portion 15b is sandwiched between the two first protrusion portions 15a in the radial direction.

The spacer 15 may be formed integrally with the insulator 12. In this case, a through-hole into which the spacer 15 is inserted is formed in the support plate 14.
The spacer 15 may not be provided.

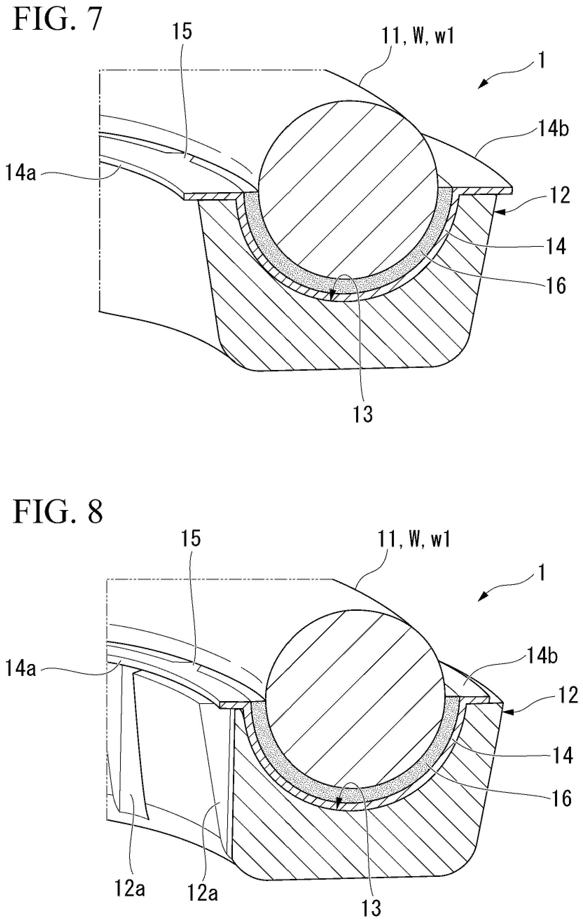

As shown in FIG. 7, an inner flange portion 14a protruding inward in the radial direction may be formed on an inner peripheral edge portion of an upper end part of the support plate 14 which is located at an inner end portion in the radial direction, and an outer flange portion 14b protruding outward in the radial direction may be formed on an outer peripheral edge portion of the upper end part of the support plate 14 which is located at an outer end portion in the radial direction.

The inner flange portion 14a and the outer flange portion 14b extend continuously over the entire length of the support plate 14 in the circumferential direction. Lower surfaces of the inner flange portion 14a and the outer flange portion 14b are adhered to the upper surface of the insulator 12. The inner flange portion 14a protrudes inward in the radial direction from the upper surface of the insulator 12, and the outer flange portion 14b protrudes outward in the radial direction from the upper surface of the insulator 12.

When molding the insulator 12 through vulcanization with the support plate 14 as an insert component, the support plate 14 can be fixed within the cavity by sandwiching portions of the inner flange portion 14a and the outer flange portion 14b that protrude from the upper surface of the insulator 12 in the radial direction with mold surfaces of a molding die in the vertical direction. In this case, upper surfaces of the inner flange portion 14a and the outer flange portion 14b are brought into contact with the mold surface of the molding die over the entire region. Portions of lower surfaces of the inner flange portion 14a and the outer flange portion 14b that protrude from the upper surface of the insulator 12 in the radial direction are brought into contact with the mold surface of the molding die over the entire region.

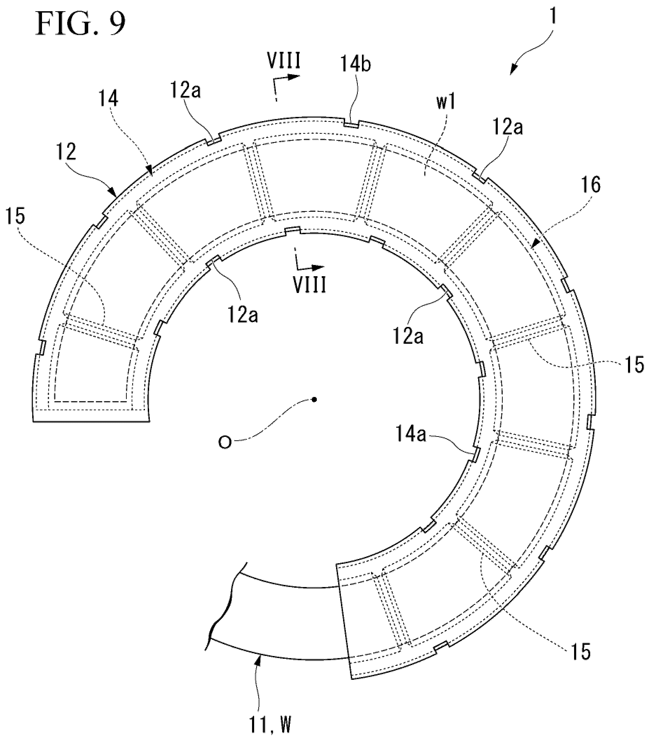

As shown in FIG. 8, the inner flange portion 14a and the outer flange portion 14b may not protrude in the radial direction from the upper surface of the insulator 12, and the lower surfaces of the inner flange portion 14a and the outer flange portion 14b may be adhered to the upper surface of the insulator 12 over the entire circumference. The insulator 12 may have a recess portion 12a which is formed in a portion away from the support groove 13, penetrates the insulator 12 in the vertical direction, and is open toward the lower surface of the inner flange portion 14a or the lower surface of the outer flange portion 14b. That is, the recess portion 12a that is open to an inner peripheral surface of the insulator 12 is provided on an inner peripheral surface side of the insulator 12, and the recess portion 12a that is open to an outer peripheral surface of the insulator 12 is provided on an outer peripheral surface side of the insulator 12. The recess portion 12a provided on the inner peripheral surface side of the insulator 12 is open toward the lower surface of the inner flange portion 14a, and the recess portion 12a provided on the outer peripheral surface side of the insulator 12 is open toward the lower surface of the outer flange portion 14b. As shown in FIGS. 8 and 9, the recess portion 12a may be open to the inner peripheral surface or the outer peripheral surface of the insulator 12, or may be a through-hole that is not open to the inner peripheral surface or the outer peripheral surface of the insulator 12. A plurality of the recess portions 12a are provided at intervals in the circumferential direction. The plurality of recess portions 12a provided on the inner peripheral surface side of the insulator 12 and the plurality of recess portions 12a provided on the outer peripheral surface side of the insulator 12 are provided at different positions in the circumferential direction.

When molding the insulator 12 through vulcanization with the support plate 14 as an insert component, the upper surfaces of the inner flange portion 14a and the outer flange portion 14b are brought into contact with the mold surface of the molding die, and the lower surfaces thereof are brought into contact with upper end surfaces of protrusions provided in the cavity for molding the recess portions 12a. Accordingly, the inner flange portion 14a and the outer flange portion 14b are sandwiched in the vertical direction between the mold surface of the molding die and the upper end surfaces of the protrusions in the cavity, and the support plate 14 can be fixed within the cavity.

In addition, the components in the above-described embodiments can be appropriately replaced with well-known components within a range not departing from the meaning of the present invention, and the embodiments and modified examples described above may be appropriately combined.

The aspect of the present invention is, for example, as follows.
<1> A coil spring device including:
   a main body spring in which a wire rod extends in a vertical direction in a spiral shape around a coil axis; and
   an insulator made of rubber or an elastomer and configured to support a lower end part of the main body spring from below the main body spring,
   in which the insulator is provided with a support groove that extends around the coil axis and into which the lower end part of the main body spring is inserted,
   a support plate formed of plastic or a metal material is fixed to an inner surface of the support groove, and
   the lower end part of the main body spring is adhered to the support plate.
<2> The coil spring device according to <1>,
   in which the support plate is configured to be deformed in response to elastic deformation of the insulator.
<3> The coil spring device according to <1> or <2>,
   in which the support plate is vulcanized and adhered to the inner surface of the support groove.
<4> The coil spring device according to any one of <1> to <3>,
   in which the support plate is formed in a semi-tubular shape that is open upward and that is curved to extend around the coil axis, and
   the lower end part of the main body spring is inserted inside the support plate.
<5> The coil spring device according to any one of <1> to <4>,
   in which a spacer configured to support an outer peripheral surface of the wire rod and provide a gap between the outer peripheral surface of the wire rod and the support plate is provided between the support plate and the lower end part of the main body spring.

### INDUSTRIAL APPLICABILITY

According to the present invention, the thermal conduction characteristics can be stably exhibited as designed and damage to a heat-generating body can be suppressed.

### REFERENCE SIGNS LIST

1 Coil Spring Device
11 Main body spring
12 Insulator
13 Support groove
14 Support plate
15 Spacer
O Coil axis
W Wire rod

## Claims

1. A coil spring device comprising:
a main body spring in which a wire rod extends in a vertical direction in a spiral shape around a coil axis; and
an insulator made of rubber or an elastomer and configured to support a lower end part of the main body spring from below the main body spring,
wherein the insulator is provided with a support groove that extends around the coil axis and into which the lower end part of the main body spring is inserted,
a support plate formed of plastic or a metal material is fixed to an inner surface of the support groove, and
the lower end part of the main body spring is adhered to the support plate.

2. The coil spring device according to Claim 1,
wherein the support plate is configured to be deformed in response to elastic deformation of the insulator.

3. The coil spring device according to Claim 1 or 2,
wherein the support plate is vulcanized and adhered to the inner surface of the support groove.

4. The coil spring device according to Claim 1 or 2,
wherein the support plate is formed in a semi-tubular shape that is open upward and that is curved to extend around the coil axis, and
the lower end part of the main body spring is inserted inside the support plate.

5. The coil spring device according to Claim 1 or 2,
wherein a spacer configured to support an outer peripheral surface of the wire rod and provide a gap between the outer peripheral surface of the wire rod and the support plate is provided between the support plate and the lower end part of the main body spring.
